(19) Europäisches Patentamt
European Patent Office
Office européen des brevets

(11) EP 0 849 872 B1

(12) EUROPEAN PATENT SPECIFICATION

(45) Date of publication and mention
of the grant of the patent:
**11.09.2002 Bulletin 2002/37**

(51) Int Cl.[7]: **H02P 7/628**, H02M 1/00

(21) Application number: **97410145.3**

(22) Date of filing: **19.12.1997**

(54) **Induction motor controller**

Induktionsmotorsteuerung

Commande de moteur asynchrone

(84) Designated Contracting States:
**DE FR GB IT**

(30) Priority: **19.12.1996 FR 9616002**

(43) Date of publication of application:
**24.06.1998 Bulletin 1998/26**

(73) Proprietor: **STMicroelectronics S.A.**
**92120 Montrouge (FR)**

(72) Inventors:
• **Bourgeois, Jean-Marie**
**01220 Divonne-Les Bains (FR)**
• **Charreton, Jean-Marie**
**13320 Bouc Bel Air (FR)**
• **Maurice, Bruno**
**13510 Eguilles (FR)**

(74) Representative: **de Beaumont, Michel**
**1, rue Champollion**
**38000 Grenoble (FR)**

(56) References cited:
**US-A- 4 162 435**          **US-A- 4 469 997**
**US-A- 4 935 684**

• **DATABASE WPI Section EI, Week 8604 Derwent**
**Publications Ltd., London, GB; Class X13, AN**
**86-027221 XP002038446 & SU 1 166 257 A (MOSC**
**POWER INST) , 7 July 1985**
• **PATENT ABSTRACTS OF JAPAN vol. 003, no.**
**141 (E-153), 21 November 1979 & JP 54 120818**
**A (FUJI ELECTRIC CO LTD), 19 September 1979,**

**Description**

The invention relates to the control of motors, particularly polyphase induction motors. More particularly, it relates to methods and circuits for controlling polyphase induction motors in current mode, to produce a controlled torque.

An induction motor comprises a stator, containing a number of windings, and a rotor containing a number of conductors, each approximately parallel to the axis of the rotor, and having corresponding ends electrically connected together.

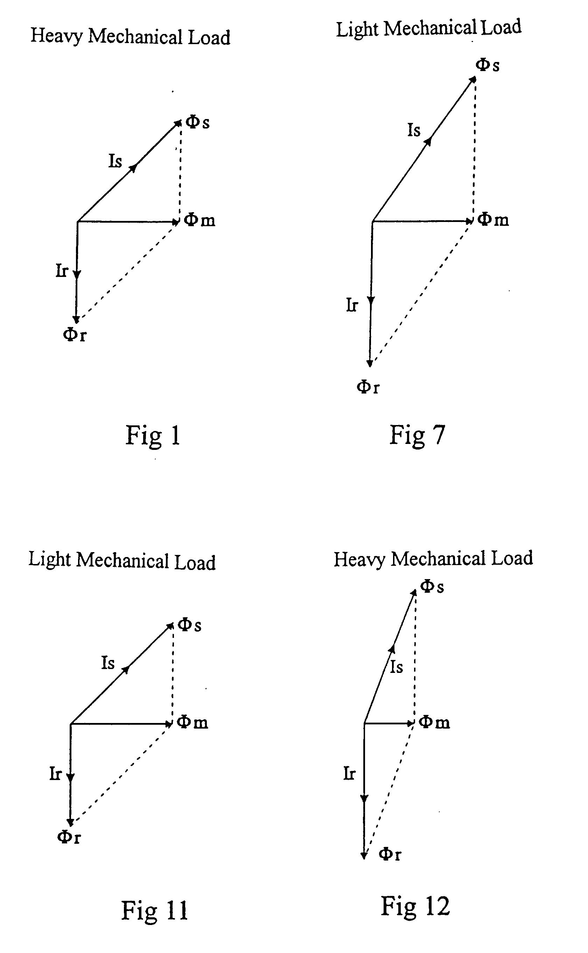

Referring to the vector diagram of figure 1, alternating voltages are applied to the windings of the stator, causing a stator current Is to flow, and producing a rotating stator flux Φs in phase with stator current Is. This rotating stator flux Φs induces a voltage in each of the conductors of the rotor. These induced voltages cause currents Ir to flow in the rotor, generating a reactive rotor magnetic flux Φr in phase with rotor currents Ir. The interaction of this rotor flux with the stator flux causes a force to be exerted on the conductors of the rotor. This force causes the motor to turn, and may be used to drive a mechanical load. The total flux Φm in the motor is the vector sum of the rotor flux Φr and the stator flux Φs.

Within the motor, the main sources of power loss are: iron losses, caused by magnetising and demagnetising the iron cores in the rotor and in the stator and copper losses, being the losses in the windings due to their resistance. There are also losses due to electrical resistance of the conductors in the rotor, and mechanical resistance of the rotor.

To induce a current Ir in the conductors of the rotor, the stator magnetic flux Φs must rotate at a different speed than the rotor, usually faster. The difference in speed is called the slip. The magnitude of the currents Ir in the rotor are proportional to a rotor voltage, itself determined by the slip speed.

The following speeds may be defined:

Wr : rotational speed of the rotor (load speed);
Wsm: speed of rotation of the magnetic field in the stator (synchronous speed);
Ws : the relative rotational speed of the magnetic field of the stator as seen by the rotor (slip speed). Ws=Wsm-Wr.

Alternatively, the slip may be defined as a percentage:

$$\text{Slip} = (\text{Wsm-Wr})/\text{Wsm} \times 100\%.$$

It is required to control induction motors to operate over a range of speeds, and to drive a variety of loads. This should be performed with the greatest possible efficiency, not only to reduce power consumption, but also to prevent heating of the motor from reaching unacceptable, potentially damaging, levels. High efficiency would also allow smaller, less expensive motors to be used, as they will not be required to dissipate large amounts of power.

Driving an induction motor directly from a mains AC supply would impose a fixed synchronous speed Wsm. To have a variable synchronous speed, the AC supply is normally rectified into a DC voltage, and that DC voltage used to drive a variable frequency AC supply. Sinusoidal voltages may be generated, or more simply DC voltages may be switched on and off at suitable times.

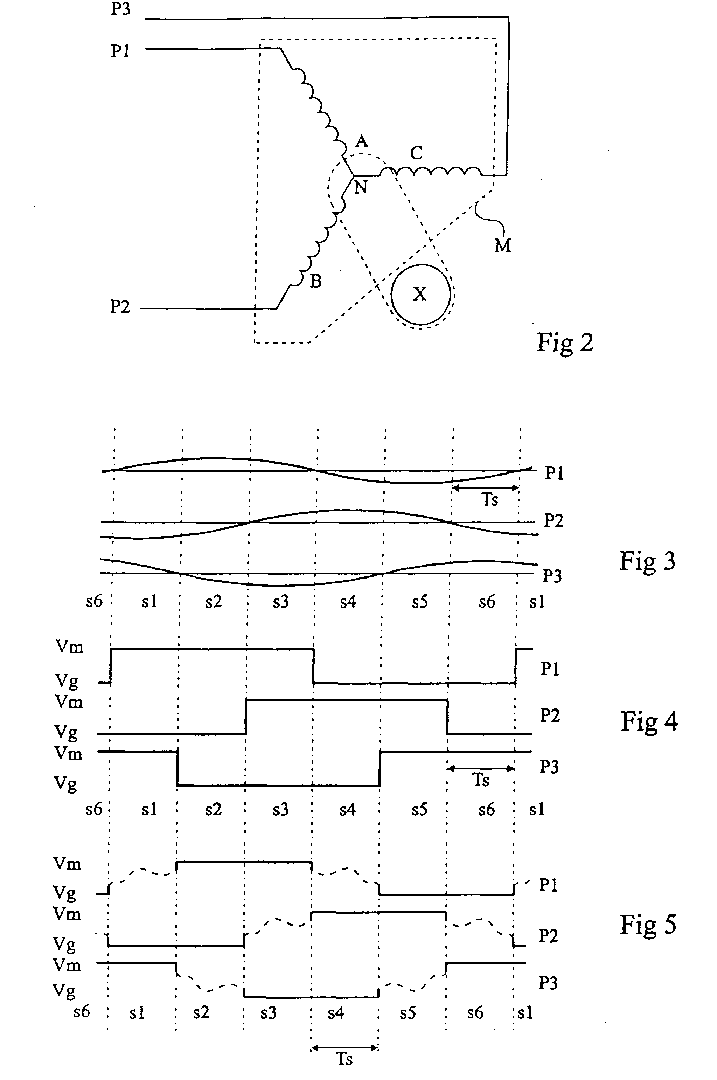

Figure 2 shows a common type of induction motor M having three windings A, B, C, star-connected at a common node N. The windings receive voltages P1, P2, P3 respectively at their accessible ends.

Figure 3 shows possible forms of the voltages P1, P2, P3. They corresponds to sine waves, each 120° out of phase with the others. These voltage waveforms offer optimal efficiency of the motor, but are difficult to generate. An easier solution is to use switched DC voltages to emulate these sinusoidal waveforms.

Figure 4 represents a second possible set of voltage waveforms for the voltages P1, P2, P3. An upper DC supply voltage Vm is applied for half of each cycle, corresponding to the positive half cycle of the corresponding voltage in figure 3, and a lower supply voltage Vg is applied to correspond to the negative half cycle of the corresponding voltage in figure 3. These voltage waveforms are known as 180° six step DC voltages, since each voltage is applied for half of a complete cycle, and six steps s1 - s6 form a complete cycle. These 180° six step DC voltages are used in many known induction motor control circuits. The six steps s1 - s6 are also labelled in figure 3 for convenience of comparison.

Figure 5 shows another possible set of voltage waveforms for the voltages P1, P2, P3. Upper supply voltage Vm is applied for one third of each cycle, corresponding to two consecutive steps (s2, s3 for P1), or two-thirds of each positive half cycle of the corresponding voltage in figure 3, and a lower supply voltage Vg is applied for two consecutive steps (s5, s6 for P1), or two-thirds of each negative half cycle of the corresponding voltage in figure 3. During two steps of each cycle (s1, s4 for P1), between each applied voltage, the accessible end of the respective winding is unconnected, and is at a floating voltage. These voltage waveforms are known as 120°, six-step DC voltages, since each voltage is applied for one third (120°) of a complete cycle, and six steps s1 - s6 form a complete cycle.

The speed of flux rotation in the motor Wsm is determined by the speed with which the steps s1 - s6 are executed. A step period Ts may be defined, as the duration of one step. A step frequency will then be 1/Ts, and will be six times the stator flux frequency Wsm.

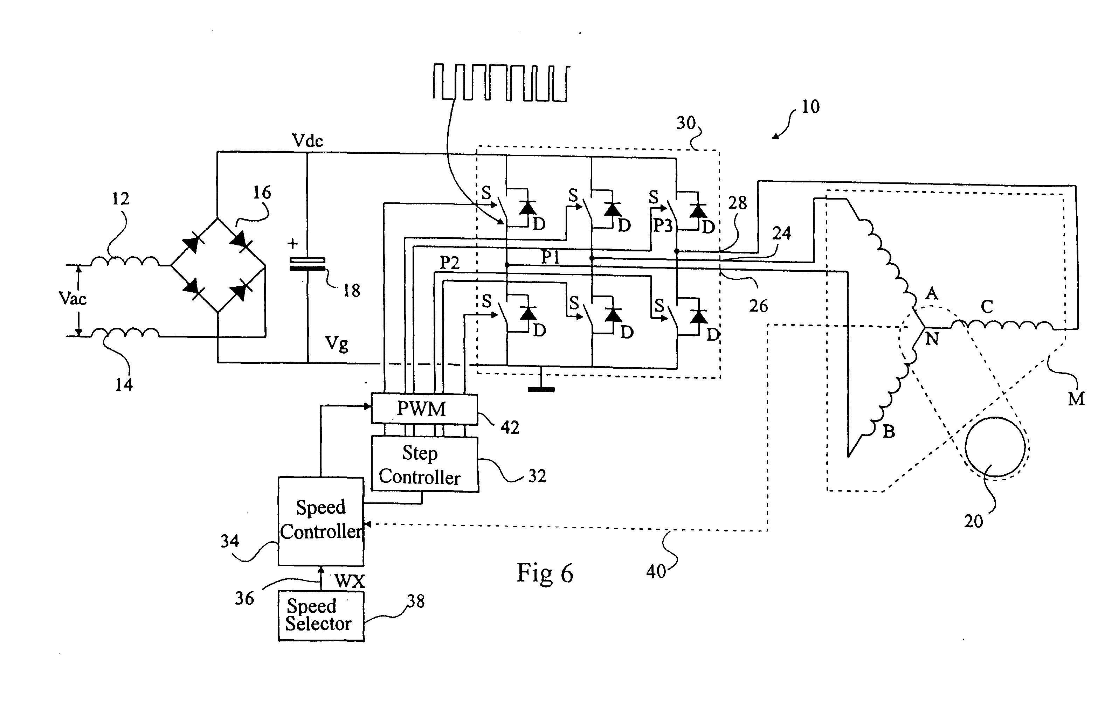

Figure 6 shows an induction motor control circuit 10 of the prior art. A mains voltage Vac is applied via optional series inductors 12, 14 to a bridge rectifier 16, which supplies a rectified voltage, smoothed by charge storage capacitor 18 to provide a substantially constant voltage Vdc. Capacitor 18 is usually a very high value chemical (electrolytic) capacitor. An induction motor M drives a mechanical load 20. The stator of motor M includes a plurality of windings A, B, C. Each of these windings is connected at one end to a common node N. This connection is the "star" connection. Each winding also has another, accessible, end connected to an output terminal 24, 26, 28 of a switching bridge 30. Within switching bridge 30, each output terminal 24, 26, 28 may be connected to Vdc or to a lower supply voltage Vg by controlled switches S. Voltages P1, P2, P3 applied at terminals 24, 26, 28 to the windings A, B, C of the motor M, are pulse width modulated between Vdc and Vg. Connected in parallel with each controlled switch S is a reverse biased freewheel diode D. A step control circuit 32 controls the switches S to execute the steps sl-s6 illustrated in figure 4. The switches S are controlled so that each winding is sequentially connected first to upper supply voltage Vdc, then to lower supply voltage Vg. Freewheel diodes D protect from overvoltages caused by disconnecting inductive windings A, B, C from the supply voltages. The voltages on the windings are limited by freewheel diodes D to stay between Vg and Vdc. Typically, in a mains controlled motor, Vdc may be up to 300V higher than Vg, which may itself usefully be considered as a ground voltage. Phase voltages P1, P2, P3 can be considered to be combined into a single, rotating motor voltage Vm.

A speed control circuit 34 receives a required speed Wx input 36 from a speed selector 38. A feedback signal 40 may be supplied to speed control circuit 34 to indicate the actual speed of the motor M, for example using a tachometer mechanically connected to the motor. Using the information supplied by 36 and 40, the speed control circuit 34 instructs a pulse width modulator PWM, 42, to adjust the pulse width modulation of phase voltages P1, P2, P3. The speed control circuit 34 also governs the stator flux rotation speed Wsm by instructing step control circuit 32.

The capacitor 18 is necessarily large, in order to supply a fairly constant voltage Vdc. There will be peaks of current derived from the mains near the peak voltages of each half-cycle of the mains voltage Vac, to recharge the charge storage capacitor 18. The peaks of current introduce harmonics onto the mains network. Series inductors 12, 14 of relatively high values may be present between the diode bridge 16 and the mains input Vac, to lower the magnitude of these harmonics.

Normally, and as in this case, induction motors M are controlled in a voltage mode. The magnitude of the applied phase voltages P1, P2, P3 will affect the current flowing in the windings A, B, C, and hence the torque generated to the load 20. Further, the frequency of the voltages applied will affect the slip speed Ws, and so will also affect the torque generated to the load 20.

Both the current and the slip are also dependent on the magnitude of the load.

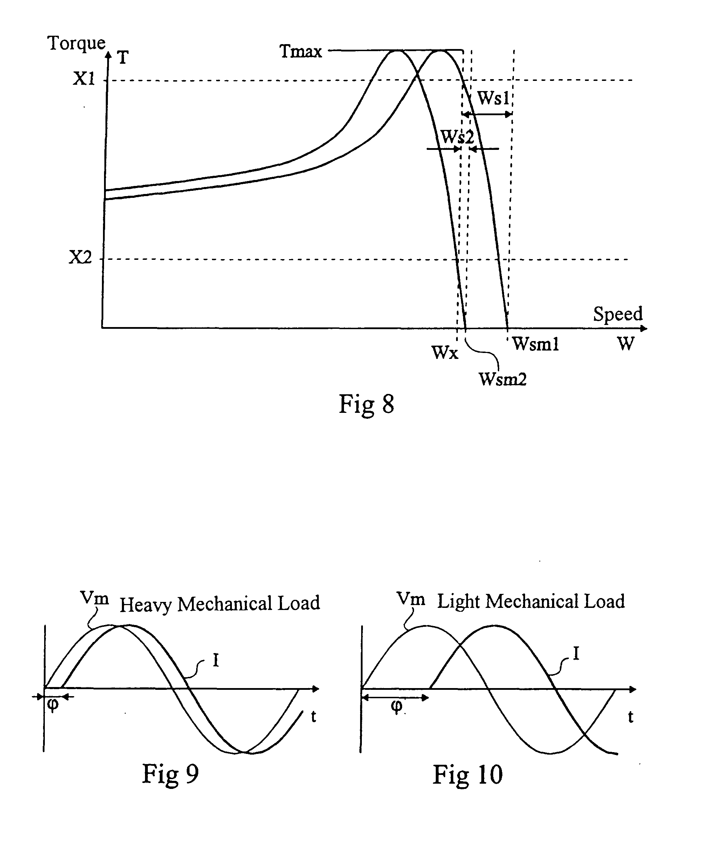

Figure 7 shows a vector diagram of fluxes and currents in an induction motor, controlled in voltage mode, with increased loading compared with that represented in figure 1. Controlling the rotor speed by suitably setting the applied phase voltages P1, P2, P3 leads to a substantially constant motor flux $\Phi$m. The motor flux $\Phi$m is thus constant between figures 1 and 7.

As loading of the motor increases, the slip increases and so does the stator current Is. Its phase angle has changed. A higher stator flux $\Phi$s is generated, itself inducing an increased current Ir in the rotor, generating a higher rotor flux $\Phi$r. Due to the changed phase angle of Is, both stator and rotor flux have increased, keeping the total motor flux $\Phi$m constant. The fluxes $\Phi$s, $\Phi$r are very high, as are the currents Is, Ir. The motor is not being operated efficiently.

Such control methods use the stator voltage Vm to maintain a constant magnetisation, that is, a constant total motor flux level $\Phi$m, in the motor. The induction motor M is usually operated at the maximum flux that it can support.

A motor controlled in such a way is not very efficient.

By operating a motor with very high flux levels, much reactive energy is stored in a high magnetic field within the motor. The useful energy, that which is transferred to the load, is supplied according to the needs of the load. Energy will be supplied to the load if it is turning slower than the required speed Wx, and less energy will be supplied to the load if it is turning at about the required speed. The relationship between reactive energy and active energy determines the phase difference between the voltage applied to a winding and the current flowing through it.

In the above described control method, the phase voltages P1, P2, P3 making up the stator voltage Vm applied to the motor are fixed for a given speed. Phase voltages P1, P2, P3 are functions of the stator frequency Wsm as determined by speed control circuit 34 and pulse width modulator 42. The current flowing in the motor and the rotor speed are then functions of the load 20. When there is a low load, the active current falls.

Such voltage mode controls usually operate according to a linear, or approximately linear, relationship.

Figure 8 shows curves representing the torque T supplied by motor M operated according to the above described method.

For a given required speed Wx, the flux $\Phi$m produced and the maximum available torque Tmax, are constant. The torque in an induction motor is a function of the slip, if the voltage applied Vm is constant. The slip speed Ws is the difference between the stator flux frequency Wsm and the rotational speed Wr. The torque increases as the slip increases, up to a limit Tmax. The limit occurs where joule heating losses limit the effectiveness of the motor. The "performance" of a motor controller is traditionally considered as the maximum available power, or torque, not the electrical efficiency of the motor.

If a high mechanical load torque X1 is applied to the motor, and the load is to be turned at desired speed Wx, the speed control circuitry 34 increases the speed of rotation of the stator flux Wsm, to a high value Wsm1. The slip speed is now Ws1 = Wsm1-Wx. This high slip speed enables the large torque X1 required to be produced. A maximum available value of torque Tmax is fixed to be higher than all mechanical load torque values which will be applied to the motor M. The maximum torque Tmax is fixed by the value of the voltage Vdc supplied to the motor, as controlled by pulse width modulator 42. Should the applied mechanical load exceed Tmax, the motor will stop.

If, instead, a low mechanical load torque X2 is applied to the motor, and the load is still to be turned at the desired speed Wx, the speed control circuitry 34, and the step control circuitry 32 decrease the speed of rotation of the stator flux Wsm, to a reduced value Wsm2. The slip speed is now Ws2 = Wsm2-Wx. This reduced slip speed ensures that a reduced torque X2 is produced, so that the motor does not rotate any faster than Wx.

If no load were applied to the motor, the slip speed Ws will be almost zero.

The motor can be loaded heavily without any risk of becoming unstable - that is, of the load being higher than an instantaneous value of Tmax. A high maximum torque value Tmax is always available.

Figures 9, 10 illustrate the changing phase differences between applied stator voltage Vm and current flowing I.

As shown in figure 9, with a heavy mechanical load X1, the applied voltage Vm and current I have a small phase difference φ, as a large proportion of active energy is being produced. The motor operates efficiently.

As shown in figure 10, when the mechanical load X2 is light, the phase difference φ between applied stator voltage Vm and current flowing I may be up to 90°. Most of the energy dissipated in the motor is reactive energy.

An alternative method for controlling an induction motor involves ensuring that the current I supplied remains at a constant value, rather than the applied stator voltage Vm.

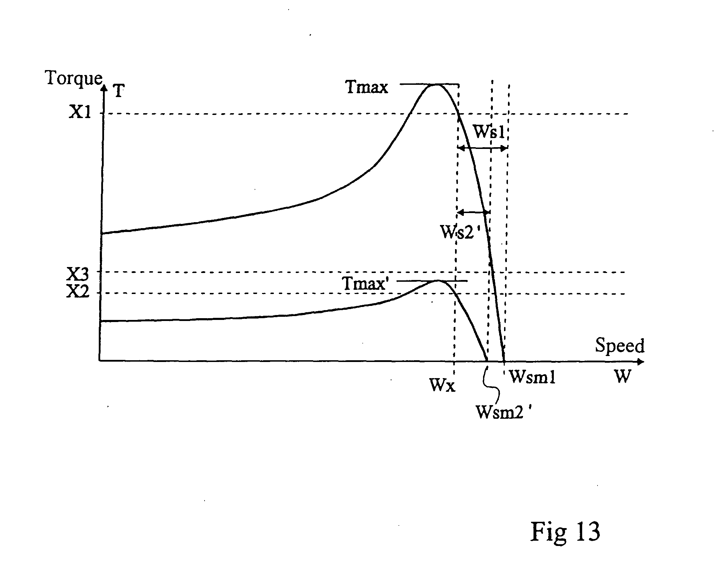

Figures 11, 12 show vector diagrams for currents and fluxes in an induction motor controlled in constant current mode.

Figure 11 shows a vector diagram for a motor driving a light mechanical load torque X2, and corresponds to figure 1.

Figure 12 shows the vector diagram for the motor driving a heavier mechanical load torque, X1. Due to the higher loading, the current Is in the stator changes in phase to be closer to the applied stator voltage Vm. It cannot, however, change in magnitude. The current Ir in the rotor becomes increased due to increased slip speed. The total motor flux Φm becomes significantly reduced. Instability of the motor will occur as the motor flux Φm may become insufficient to supply the required torque.

In applications such as ventilators or vacuum cleaners, loads vary in time, according to the air pressures on input and output sides. Again, the motor is usually operated at a constant current, hence constant flux value, that constant flux being sufficient to operate the appliance at maximum planned load torque, but being inefficient at other times.

European patent application EP-A-0470607 describes an improved motor control circuit, in that a feedback circuit is provided which measures the current consumed by the motor, and can adapt the voltage applied accordingly, in order to increase efficiency. However, the motor control circuit described in that application still has all the inherent drawbacks associated with voltage mode control.

The very high value charge storage capacitor 18 has a limited lifetime; it will vary in value or break down after a number of years, usually before the expected lifetime of the apparatus containing the motor M. The large capacitor 18 and large series inductors 12, 14 are also expensive. It would therefore be advantageous to provide a motor control circuit which requires neither a high value charge storage capacitor, nor large series inductors in the mains conductors to reduce current harmonics.

Electricity supply companies are increasingly requiring a reduction of current harmonics on mains supplies. Drawing of currents which pass through high peaks is often forbidden. The use of the series inductors 12, 14 in the mains leads is acceptable for motors of up to about 600W, but for motors such as 1.5kW, this becomes impractical due to the large size and high cost of appropriate inductors. There are also requirements of electricity supply companies or other regulatory bodies that mains current consumed be substantially in phase with, and proportional to the instantaneous value of, the mains voltage.

An object of the present invention is to provide a motor control circuit and method which avoids the storage of large amounts of reactive energy.

Another object of the present invention is to provide a motor control circuit which controls a motor to operate at a reduced current level, but which does not risk instability of the motor when the applied load varies.

Another object of the present invention is to provide such a motor control circuit which has a long lifetime, and reduced cost.

Another object of the present invention is to provide a motor control circuit which derives current from a mains power supply substantially in phase with and proportional to the instantaneous value of, the mains voltage.

To achieve these and other objects, the invention provides a method for controlling a polyphase induction motor, the motor comprising a rotor, and a stator containing windings each having a first end connected together at a common node, and each having one accessible end, the method comprising the steps of (a) imposing a current to circulate through a combination of at least two but not all of the windings, the current entering the stator by at least one accessible end, passing through the common node and leaving through another at least one accessible end, the windings not carrying the current being at floating voltages; (b) measuring a value of flux amplitude in the motor; (c) imposing a current to circulate through a different combination of at least two but not all of the windings, the magnitude of the current being controlled according to the measured value of the flux amplitude in the motor, windings not carrying the current being at floating voltages; and periodically repeating steps (b) and (c).

In particular, the invention provides a method for measuring a value of flux amplitude in a star-connected motor comprising the steps of: (1) interrupting a current flowing through at least a first winding, so as to de-energise the at least first winding; (2) imposing a fixed voltage onto an accessible end of each winding other than the at least first winding, the other windings entering a freewheel mode; and (3) while the other windings are in the freewheel mode, measuring the voltage induced in the at least first winding, to derive the value of flux amplitude in the motor.

The method of controlling the motor may further comprise the step of controlling the current imposed through the stator so as to maintain the value of the flux amplitude at a substantially constant, predetermined, value.

The method may further comprise the step of modulating the current imposed through the stator according to a voltage of an external alternating voltage power source.

The modulating may be performed so as to ensure that the current in the stator is substantially in phase with the voltage of the alternating voltage power source.

The variations of current in the mains may be detected across an inductor used as part of a filter, and applied to modulate the current consumed by the motor in a negative-feedback arrangement.

The voltage across the inductor may be detected by a circuit including two potential dividers, switched by diodes in such a way as to function symmetrically with respect to the reference point of the signal. A low voltage node of each divider is at the reference voltage of the control circuit, whatever the voltage of the alternating power source, or the conduction state of the diodes.

In an alternative embodiment, the invention provides a method for controlling a polyphase induction motor, the motor comprising a rotor, and a stator containing windings each having two ends, each end being connected to an end of an adjacent winding, at a node, the method comprising the steps of (a) imposing a current to circulate through a combination of at least two but not all of the nodes, the current entering the stator by at least a first node, passing through at least some of the windings and leaving through at least a second node; (b) measuring a value of flux amplitude in the motor; (c) imposing a current to circulate through a different combination of at least two but not all of nodes, the magnitude of the current being controlled according to the measured value of the flux amplitude in the motor; and periodically repeating steps (b) and (c).

In particular, the invention provides a method for measuring a value of flux amplitude in a delta-connected motor comprising the steps of: (1) interrupting a current flowing into at least one node, for a period of time sufficient to allow the currents in the windings to stabilise; (2) imposing a fixed voltage upon each node other than the at least one node; and (3) while the fixed voltage is imposed onto the other nodes, measuring the voltage present at the at least one node, to derive the value of flux amplitude in the motor.

The invention also provides a circuit for controlling a polyphase motor including a switching bridge between upper and lower supply voltages; accessible supply nodes of the motor; and a pulse width modulation controller and a step controller for controlling the switching bridge to cause the motor to rotate at a desired speed. The pulse width modulation controller is adapted to cause a desired value of current to flow through the motor, irrespective of the voltage required to cause such a current to flow. Circuitry is provided for periodically measuring the amplitude of magnetic flux within the motor. Comparison means are provided for comparing the measured flux amplitude to a flux reference value. Means for modifying the pulse width modulation accordingly are also provided. The circuit further comprises a modulator for controlling the instantaneous current flowing in the motor, so as to be approximately proportional to the instantaneous voltage of the alternating voltage supply.

The circuitry for periodically measuring the amplitude of the magnetic flux comprises: a sample-and-hold circuit for holding a value measured at a predetermined instant, at an accessible node of the motor, no current flowing through the accessible node at the predetermined instant; a differential circuit for generating a signal representative of the difference between the held value and a value representing a required flux amplitude.

These objects, characteristics and advantages, in addition to others, of the present invention, will be described in detail in the following description of particular, non-limiting embodiments, with reference to the accompanying diagrams, wherein:

Figure 1 shows a vector diagram for fluxes and currents in an induction motor supplied in voltage mode and operating a light mechanical load;

Figure 2 shows a circuit diagram of a three-phase induction motor;

Figure 3 shows sinusoidal voltage waveforms which could be applied to operate a three-phase induction motor;

Figure 4 shows a first set of switched DC voltage waveforms which could be applied to operate a three-phase induction motor;

Figure 5 shows a second set of switched DC voltage waveforms which could be applied to operate a three-phase induction motor;

Figure 6 shows a known circuit for controlling an induction motor;

Figure 7 shows a vector diagram for fluxes and currents in an induction motor supplied in voltage mode and operating a heavy mechanical load;

Figure 8 shows a plot of torque against motor speed for an induction motor according to the prior art;

Figure 9 shows a phase relationship between applied voltage and current supplied to an induction motor operating a heavy mechanical load, according to the prior art;

Figure 10 shows a phase relationship between applied voltage and current supplied to an induction motor operating a light mechanical load, according to the prior art;

Figure 11 shows a vector diagram for fluxes and currents in an induction motor supplied in current mode and operating a light mechanical load;

Figure 12 shows a vector diagram for fluxes and currents in a prior art induction motor supplied in current mode and operating a heavy mechanical load;

Figure 13 shows a plot of torque against motor speed for an induction motor controlled according to the invention;

Figures 14A to 14D show stages in the process of measuring the amplitude of the flux within the motor, according to the invention;

Figure 15 shows a circuit for controlling an induction motor, according to the invention;

Figure 16 shows voltage and current waveforms for an induction motor operated at a relatively low speed, according to the invention;

Figure 17 shows voltage and current waveforms for an induction motor operated at a higher speed, according to the invention; and

Figure 18 shows high frequency filtering circuitry, optionally added to the circuit of figure 15.

According to an aspect of the invention, a method for controlling an induction motor in current mode is provided. By reducing the current in the motor when the load is light, and increasing the current when the load is increased, the phase difference between applied voltage and resultant current may be kept low. The motor may be run always at approximately maximum available torque for the instantaneous applied voltage. This will mean less power dissipated unnecessarily in the motor.

The motor can be accurately controlled in speed, whatever load is applied.

In order to obtain high efficiency, when no mechanical load is applied, only a small current is supplied to keep the motor turning. There is no need to maintain a high flux in the motor. By reducing the applied current, the flux $\Phi m$ in the motor is reduced. The iron losses, and to some extent the copper losses, are reduced, and a more efficient motor is obtained.

Figure 13 shows torque T versus speed W curves for a motor controlled according to the method of the invention.

When the high mechanical load torque X1 is applied, the current supplied to the motor is the same as that shown in figure 8, assuming identical loads, and identical motors. The stator flux speed is Wsm1, the maximum torque available is Tmax, and the slip is Ws1, as before.

Now, supposing the light mechanical load torque X2 is applied. The maximum torque that we need to have available is Tmax'. This is larger than the load torque X2, but much less than Tmax. Therefore, a much reduced current may safely be applied to the motor. In order to rotate load torque X2 at the required speed Wx, a stator flux speed of Wsm2' and a slip speed of Ws2' are sufficient, both larger than the corresponding speeds Wsm, Ws2 of figure 8. The motor voltage Vm is not controlled as a function of the stator flux speed Wsm.

As only a reduced flux is available, it would take not too high a load to make the motor unstable - for example, an instantaneous mechanical load torque value of X3 may exceed the value Tmax' of the maximum available torque. It is therefore essential that the maximum available torque - thus the flux, and the current in the motor, be controlled to be sufficient at all times for the instantaneous value of applied load, taking any fluctuations in mechanical load into account.

As mentioned above, according to an aspect of the invention, the induction motor is controlled in current mode. A current value I is imposed, and the corresponding overall stator voltage Vm is allowed to take any value required to allow the imposed current I to flow.

A method of controlling an induction motor according to an aspect of the invention includes ensuring that the motor is operated with a flux $\Phi m$ sufficient to drive the connected mechanical load 20, but not much more. The primary current - the current supplied to the windings in the stator - is controlled in such a way as to always generate the minimum acceptable instantaneous value of flux $\Phi m$, without risking instability of the motor. We need to measure the flux $\Phi m$ in the motor, and adapt the stator current I magnitude to keep the motor flux within an acceptable range. The torque T supplied by the motor M depends on the flux Φm in the motor, which in turn, depends on the current I supplied to the motor, the rotor speed Wr and the mechanical load 20.

As the mechanical load 20 torque is increased, the current I must be increased to provide increased flux Φm, and increased torque T. The slip speed Ws will also increase, increasing rotor flux Φr. More stator flux Φs is needed to balance this, and is made available as the magnitude of the current is controlled according to the total flux in the motor. In order to control the currents in a polyphase induction motor to achieve the required efficiency, it is required to regularly measure the flux in the motor Φm.

Use of six-step current mode control rather than sinusoidal current mode control gives a slightly reduced efficiency, since the motor flux is moving by steps with time, rather than moving gradually as it would be with sinusoidal currents. However switched DC currents are much easier to generate than sinusoidal currents. Either a 180° six-step current switching scheme (which may be considered analogous to the 180° six-step voltage switching scheme illustrated in figure 3) or a 120° six-step current switching scheme (which may be considered analogous to the 120° six-step voltage switching scheme illustrated in figure 5) could be used.

In order to measure the flux in the motor, at least one winding must be periodically disconnected. This may be preferably obtained by applying 120° six-step DC currents labelled P1, P2, P3 by analogy to the voltages P1, P2, P3 of figures 3, 5, or by otherwise periodically disconnecting a winding.

The durations of the current applications, and of the disconnected intervals may be varied, but the 120° scheme of figure 5 is often considered optimal, since two windings are always connected and one unconnected, and the control method is symmetrical with respect to the three windings A, B, C.

When a winding C is disconnected, a voltage will be induced in it by the rotation of the flux in the motor. The magnitude and direction of this induced voltage will depend on the motor flux speed Wsm, the rotational speed Wr and the magnitude of the motor flux Φm. The voltage VC induced in the unconnected winding is proportional to the rate of change of the flux:

$$VC \propto d\Phi/dt.$$

The flux variation may then be measured either as an instantaneous value, or as an average over a longer period. For a given and constant speed, the flux variation is proportional to the flux amplitude. The voltage VC can therefore be used to indicate an instantaneous value of the flux amplitude, and to control it to a required value.

Immediately after a winding is disconnected, according to the 120° six-step DC current control method, a period of time is required to dissipate the energy stored in the magnetic field caused by the current previously applied. A current will circulate through one of the freewheeling diodes D until the energy stored in the magnetic field is discharged. From that point on, the voltage VC appearing across the unconnected winding C is the voltage induced by the flux variation in the motor (dΦm/dt), and that flux variation may be measured. To effect a measurement of the flux variation, it is also required to briefly disconnect the other windings from a supply voltage.

The voltage VC actually measured may be that at the free end of the unconnected winding, with reference to the upper or lower supply voltage Vdc, Vg, or it may be the voltage directly across the terminals of the unconnected winding C if access to the central node N is available.

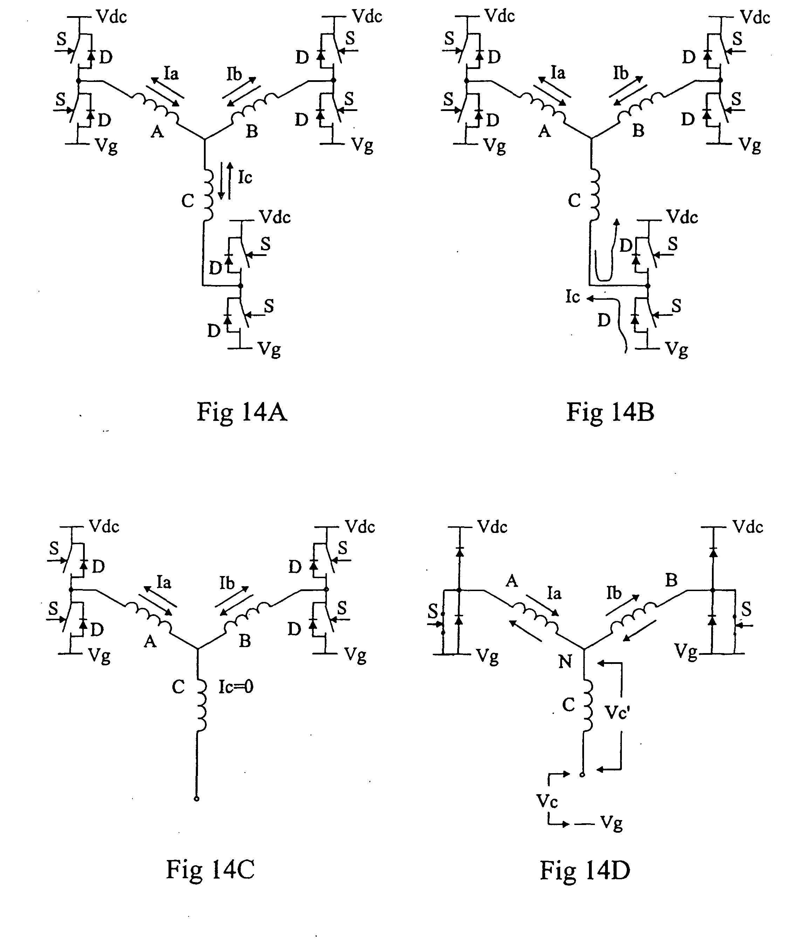

Figures 14A to 14D show various stages in the electrical arrangements made for the measurement of the voltage VC. In each figure, only those elements which carry currents are shown.

Figure 14A shows the motor windings as they are electrically controlled under normal operating conditions. The switches S are being opened and closed according to the control exerted on them by PWM controller 42. Freewheel diodes D each discharge any currents caused by the opening of the associated switch, S. Currents Ia, Ib, Ic flow in windings A, B, C, respectively.

Figure 14B shows a first stage in the procedure for the measurement of voltage VC. Although currents are still being supplied through windings A and B, switches S connected to winding C are in the open position, and a de-energising current flows through one or other of the associated diodes D, as the magnetic field in winding C diminishes.

Figure 14C shows the situation where the magnetic field in winding C is completely cancelled. No current Ic flows in winding C, and its free terminal is at a floating voltage, although limited by associated diodes D to remain between voltages Vdc and Vg.

Figure 14D shows the situation when voltage VC is actually measured. Both windings A, B are placed in a freewheeling state. Switches S are used to connect the accessible ends of windings A and B to a fixed voltage, such as Vg. The switches to upper supply voltage Vdc are kept open. Alternatively, the accessible ends of windings A and B could be connected to Vdc, in which case the switches to lower supply voltage Vg would be kept open. Currents Ia, Ib flow in associated diodes D and switches S due to the removal of a supply voltage, and the magnetic fields in these windings beginning to diminish. The voltage VC at the free end of winding C is then measured. Alternatively, the potential difference VC' between the free end of winding C and the common node N could be measured, if access to the common node is available.

The unconnected winding C must be disconnected for at least a minimum length of time equal to the demagnetising period, plus the acquisition time required to measure the induced voltage VC. The possible interruptions may be more or less than the 60° normally found in six-step control.

By measuring the motor flux Φm amplitude, the current through the motor can be controlled to ensure that enough flux amplitude is generated to drive the applied load 20 at the required load frequency Wx, but the current through the motor should be no more than necessary, to avoid reducing the efficiency of the motor.

To ensure flux optimisation, we will need a constant current source. Referring again to prior art figure 6, the DC voltage Vdc is supplied by an AC to DC converter 16, 18. It is required to provide a fixed voltage, constant current source between voltages Vg and Vdc. To maintain a constant DC voltage, one classically uses a very large bulk capacitor such as 18 in figure 6. Such capacitors have at least the following inconveniences: they are large, expensive, have a short lifetime and a low reliability. Furthermore, in operation, the charging of the large bulk capacitors only occurs near the peak values of the AC voltage. Spikes of current are drawn, introducing harmonics onto the mains network, contrary to the standards imposed by electricity supply companies.

Therefore, it is desired to remove the bulk capacitor, and replace it with a smaller one. However, simply reducing the value of the capacitor does not provide a complete solution.

To provide a constant power - constant DC current at a constant DC voltage - without the use of a large bulk capacitor, the instantaneous AC input power will need to be constant. The effect of this is that large currents, of differing polarities, are drawn on either side of zero crossing points, and a relatively small current is drawn when the AC voltage is at a high value. Such current curves unacceptably introduce harmonics onto the mains supply, and also are forbidden by standards issued by electricity supply authorities.

In order to achieve these aims - suppression of the large bulk capacitor 18 and drawing of a current of acceptable waveform, an aspect of the invention provides current modulation according to the instantaneous value of the mains supply voltage Vac, ensuring that the instantaneous current drawn is approximately proportional to the instantaneous mains supply voltage.

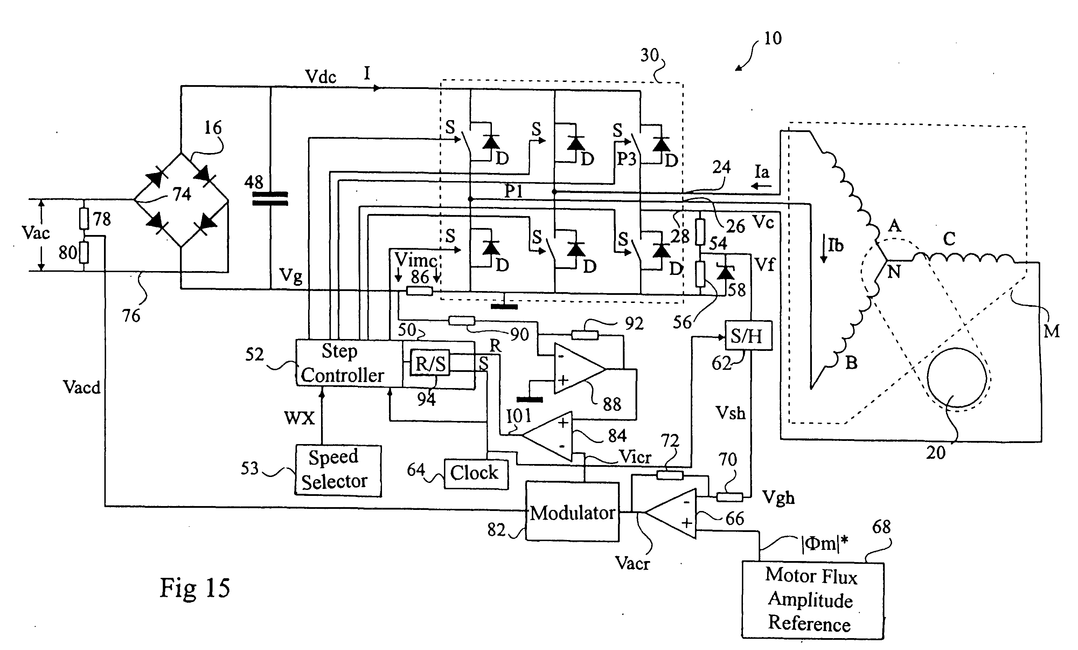

Figure 15 shows a circuit of an induction motor control circuit according to an embodiment of the invention, during 120° six-step DC current mode control. Three phase induction motor M has available ends of its three windings A, B, C, connected to outputs 24, 26, 28 of switching bridge 30 providing phase currents P1, P2, P3, by analogy with the voltages described in relation to the voltage controlled mode circuit of figure 6. These phase currents may be considered to be a single stator current, Im.

Full wave rectification bridge 16 rectifies the input mains voltage Vac, as described with reference to figure 6. The rectified voltage is then smoothed somewhat by capacitor 48. For reasons which are described below, this may be a small, low value, non-polarised capacitor.

Switching the upper Vdc and lower Vg supply voltages to the corresponding windings A, B, C of the motor M and disconnecting of windings is controlled by pulse width modulation (PWM) control circuit 50, and step control circuit 52, controlling the switches S to generate a magnetic flux Φm rotating in the stator of motor M at a required stator flux speed Wsm. Step control circuit 52 receives a required speed value Wx from a speed selector, 53. This may be provided, for example, by a microcontroller supervising the overall motor application, including the circuit of the invention.

The accessible ends of windings A, B, C are repeatedly connected to upper supply voltage Vdc, lower supply voltage Vg, or left floating according to control signals applied to controlled switches S by pulse width modulation control circuit 50 and step control circuit 52. Freewheel diodes D are provided in parallel with each controlled switch S in order to provide a path for de-energising currents, when the respective winding is disconnected from the supply voltages. For at least one of the windings, a voltage divider 54, 56 is provided, connected to the ground voltage Vg, enabling voltage measurements of that winding to be taken when it is disconnected. A voltage limiting device such as a Zener diode 58 may be provided, to provide a limited, divided voltage Vf to a sample-and-hold circuit 62 receives the divided voltage Vf, and provides a sampled value Vsh of the voltage Vf, itself proportional to the amplitude |Φm| of the motor flux Φm. The sampling is triggered during the cyclical application of the current steps sl-s6, by associated clock generator 64. The action of the sample-and-hold circuit is synchronised with the AC mains voltage Vac. An operational amplifier 66 receives the sampled, divided voltage Vsh on an inverting input, and a motor flux amplitude reference 68 indicates a required flux amplitude |Φm|* value, on a non-inverting input. This indicates the required magnitude of flux |Φm|*, which is determined by experiment for any particular type of motor. The signal may be supplied, for example, from a microcontroller supervising the overall motor application, including the circuit of the invention. Resistors 70, 72 determine the gain of the amplifier 66. This amplifier produces an analogue output signal, the "average current reference" Vacr.

A mains input supply Vac is connected between nodes 74, 76. A voltage divider 78, 80 is also connected between nodes 74, 76 and provides a divided mains voltage Vacd to a modulator 82. Modulator 82 also receives the average current reference signal Vacr, and performs a multiplication of these two signals. This multiplied value is the instantaneous current reference Vicr, and is supplied to an inverting input of a comparator 84.

A resistor 86 placed in series with the motor provides a potential difference Vimc across its terminals proportional to the instantaneous motor current. This potential difference is amplified by an inverting operational amplifier 88 before being applied to the non-inverting input of comparator 84. In such a case, the ground voltage for the circuit is no longer Vg, but rather the voltage at the lower supply voltage of the switching bridge 30, that is, Vg-Vimc. Resistors 90, 92 define the gain of the amplifier 88. The comparator 84 provides a binary signal I01 at an output indicating whether the voltage Vimc represents an actual instantaneous current in the motor which is greater or less than the instantaneous current reference value as indicated by Vicr.

Pulse width modulation control circuit 50 sets phase currents P1, P2, P3 in the motor M. It may simply comprise an RS latch 94.

RS latch 94 is set by each rising edge of the clock signal, such as 10kHz, provided by clock signal generator 64. This is used to turn on a PWM cycle by enabling the step controller 52 to apply appropriate control signals to switches S to apply the supply voltage Vdc to the motor. The rising edge of the clock signal is also used by sample-and-hold circuit 62 to sample the voltage Vf before the current in the motor has reacted to the change in state of control signals to switches S. This sampling takes advantage of the intrinsic turn-on delay of the power stage, in particular, the switches S. The current Im through the motor will begin to rise. As soon as the actual current through the motor (Vimc) exceeds the required instantaneous current (Vicr), the signal I01 provided by comparator 84 to reset input R of the RS latch 94 changes state and goes high. The RS latch 94 is reset, and the step controller 52 causes switches S to turn off the voltage to the motor and end the PWM "on" period. The RS latch 94 is set again at the next rising edge of the clock signal. In this way, pulse width modulation control is exercised over the actual current flowing through the motor, corresponding to the required instantaneous current represented by Vicr.

The voltage Vsh representing the flux amplitude |Φm| in the motor is provided to the inverting input of the operational amplifier 66. The average current reference voltage Vacr is defined by the proportional error between the required flux amplitude and the measured flux amplitude. As the flux amplitude drops, the average current reference voltage will increase.

The average current reference voltage Vacr cannot be used directly to control the current I applied to the motor, as discussed above, as current spikes would be produced during mains voltage zero crossing. The modulator 82 performs multiplication of the average current reference Vacr with the divided representation of the instantaneous mains voltage Vacd. Voltage Vacd appears as a 100Hz full wave rectified signal with respect to Vg. The multiplication is performed in such a way that the current averaged out over a whole mains cycle is equivalent to the average current reference value Vacr. The modulator 82 produces an instantaneous current reference signal Vicr which varies in synchronisation with the mains voltage Vac.

Two current modulations operate simultaneously. Firstly, the current is controlled so that the flux amplitude |Φm| in the motor is controlled as a function of the load, at relatively low frequencies, 20Hz or less, without generating much noise on the mains supply network. Also, a 100Hz modulation is performed with respect to Vacd, corresponding to the input mains voltage Vac magnitude.

The operational amplifier 88 provides a signal indicating the actual instantaneous current through the motor. The amplifier 88 provides the required amplification to provide signals at a level corresponding to the instantaneous current reference signals Vicr received by the comparator 84.

The mechanical load 20 ensures that a difference always exists between the actual motor flux amplitude |Φm| and the desired motor flux amplitude |Φm|* (68). So, there is always a voltage Vacr provided to the modulator 82 unless the load 20 becomes active.

While a winding is unconnected, the flux amplitude in the motor is sampled by the sample-hold circuit 62 and compared to the required flux amplitude, supplied by motor flux amplitude reference 68. The voltage in the unconnected winding is allowed to float to an appropriate level, although constrained to remain between Vg and Vm by the freewheel diodes D. The measurement of a voltage on the unconnected winding may be done only as a relative measure, with respect to the fixed voltage applied to the accessible ends of the other windings, for example Vg, unless access is available to the common node of windings A, B, C. The current control and its measurement are determined according to absolute values, however.

As described in relation to figures 14A to 14D, during the floating state of the unconnected winding, the other windings are also briefly put in a freewheel state. The voltage across the "unconnected" winding may then be measured. This freewheeling may be performed within a PWM "off" period, or any other suitable time where voltage supply to all windings may be simultaneously interrupted.

As shown in figure 15, at the start of a certain step s2, one winding C becomes unconnected by the opening of associated switches S. This corresponds to the situation shown in figure 14B. A certain time elapses during which that newly unconnected winding C discharges the energy stored in its magnetic field through an associated freewheel diode D.

After the demagnetisation is complete, corresponding to the situation illustrated in figure 14C, the accessible ends of the other windings A, B are connected to a fixed voltage, such as Vg, for a brief period, as shown in figure 14D. They each begin to discharge the energy stored in their respective magnetic fields, by causing currents Ia, Ib to flow through respective freewheel diodes D and switches S. During this brief period, the currents Ia, Ib are approximately equal in magnitude to those which had been flowing just previously. In the unconnected winding C, there is no current, and voltage VC may be read, to indicate the actual flux amplitude |Φm| in the motor. Reading of such an induced voltage is not impeded by the supply voltage during the brief period.

Either the voltage of the accessible end of the winding C, or the voltage across winding C may be sampled by the sample-and-hold circuit 62. The sampled voltage Vsh is an image value of the flux amplitude in the motor |Φm|.

Any reduction in rotor speed causes a higher rotor flux frequency, and so a higher rotor flux Φr magnitude. The stator flux Φs magnitude cannot increase to compensate, as the motor is current controlled, and the motor becomes closer to instability. The overall motor flux Φm (vector combination of the rotor and stator fluxes) reduces. A lower voltage VC is measured across the unconnected winding.

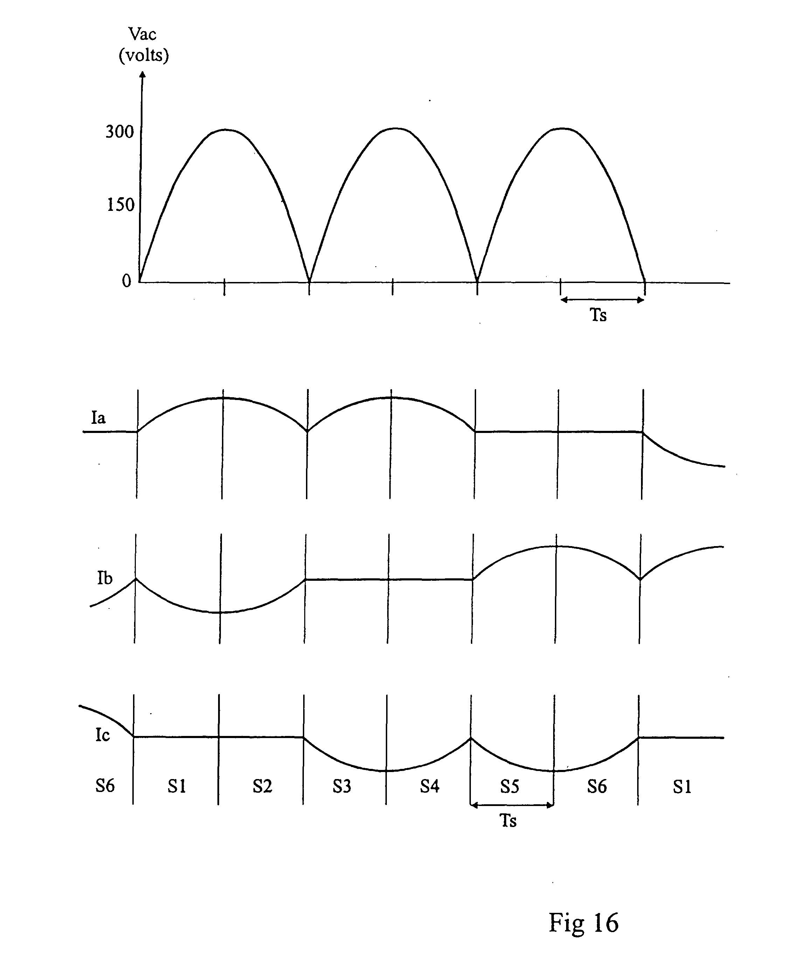

Figure 16 shows the currents Ia, Ib, Ic flowing in each of the windings A, B, C of the motor M, during steps sl-s6 of the six steps, with reference to the mains voltage Vac. The step period Ts is a sub-multiple of the mains period, so the switching of the steps sl-s6 is in phase with the applied voltage Vac. In this example, if stator flux frequency Wsm is 2000rpm (33.33Hz), the step frequency (1/Ts) will be 6 times that, 200 Hz. Two step periods Ts correspond to a half cycle of a 50Hz mains voltage Vac.

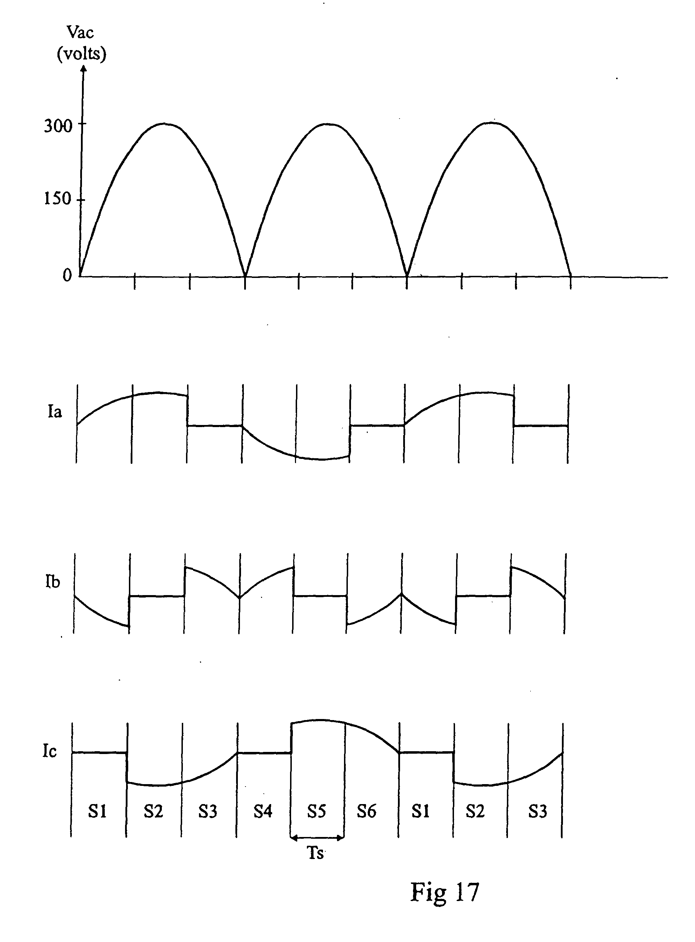

Figure 17 shows the current curves for the same motor operating at a higher speed, such as 3000rpm. The step frequency (1/Ts) is then 300Hz, and three steps correspond to a half cycle of a 50Hz mains Vac. Currents in any one winding are applied and cut very abruptly. However, as one current is cut, the same current is immediately applied to another winding. For example, at the end of step s4, a current Ib is cut from winding B to be immediately applied, as Ic, to winding C. The current supplied by the mains is therefore continuous, sinusoidal, and in phase with the applied voltage Vac.

When a current is switched from one winding to another, there may be a slight peak in current supplied due to the requirement of magnetising one winding while demagnetising another.

Of course, the motor may be operated with stator flux frequencies which are not multiples of the mains frequency. In such cases, the current waveforms become more complex, but the circuit operates in exactly the same way.

Use of a controlled, modulated, current is less efficient than the use of a constant DC current, but has the advantage of drawing a mains current of the required form.

By using the described 100Hz modulated current, neither the high value energy storage capacitor 18 nor any large series inductors of figure 6 are required. The cost of the overall system is thus reduced. Elimination of the unreliable chemical capacitor increases the useful life time of the system. A small high frequency filter may need to be added across the mains voltage Vac to filter out any small quantities of high frequency noise that would be generated by the PWM modulation.

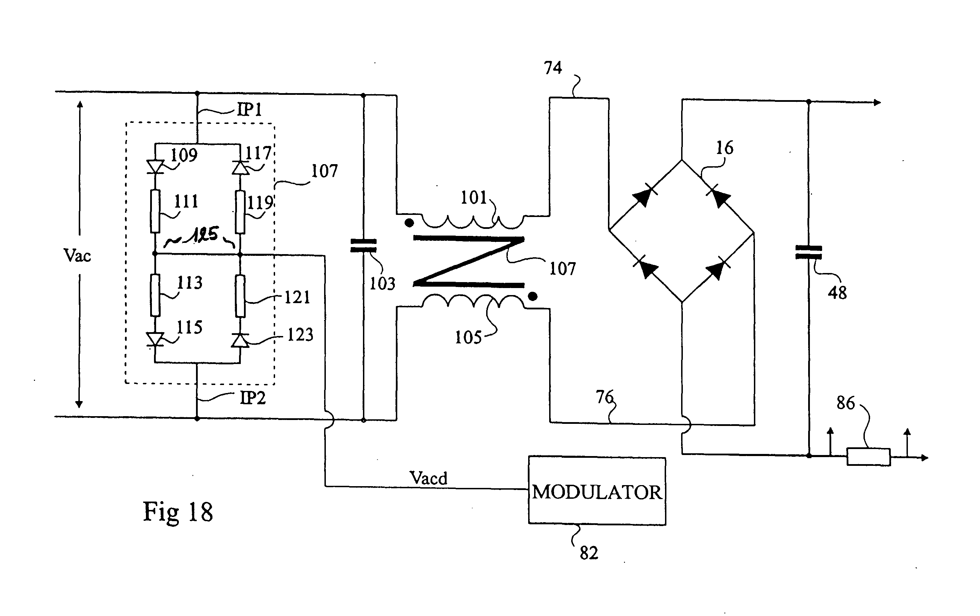

Figure 18 illustrates such high frequency filtering circuitry which may be used in conjunction with the circuitry described above, to reduce high frequency noise which may be received from the mains network, or generated by the pulse width control of the circuit. Connected between the nodes 74, 76, themselves described in relation to figure 15, is an LC filter comprising a first inductor 101 connected in series with a capacitor 103, and a second inductor, 105. The two inductors 101, 105 are wound onto a common core 107. The ends of the inductors connected by the capacitor 103 are magnetically dissimilar ends. The mains input voltage Vac is applied across the terminals of the capacitor 103. In addition, a potential divider network 107 having inputs IP1 and IP2 is connected across the mains input, and replaces resistors 78, 80 of figure 15.

Within the potential divider network 107, two potential divider chains are provided. A first potential divider chain comprises diode 109, resistor 111, resistor 113 and diode 115 connected respectively in series between inputs IP1 and IP2 of 107. A second potential divider chain comprises diode 117, resistor 119, resistor 121 and diode 123 connected respectively in series between inputs IP1 and IP2. The nodes between the resistors in each chain are connected together, and this common node 125 provides voltage Vacd as an output, as described in relation to figure 15.

Preferably, the values of inductors 101 and 105 are equal, for reasons of symmetry.

Resistors 111 and 121 have high values, and their associated diodes 109, 123 have cathodes connected towards the common node 125. Resistors 113 and 119 have low values, and their associated diodes 115, 117 have anodes connected towards the common node 125. The overall effect of this is to provide a 100Hz modulation voltage as the voltage Vacd using a simple potential divider with equal value resistances, such as 78, 80 of figure 15. However, this provides the advantage of supplying a split signal alternatively switched at 100Hz by associated diodes. As discussed below, this allows the reactive voltage developed by one or other of the inductances to be included in the modulation.

Capacitor 103 is of low value, to provide the required high frequency filtering, without introducing a large capacitor with all the previously discussed disadvantages. However, a small value capacitance in conjunction with a reasonably small inductor 101, 105, may establish a resonant system with a resonant frequency of a few hundred hertz. To avoid, or cancel, such oscillations, a further, opposing, current modulation may be provided. The voltage developed across either of the inductors 101, 105 will represent the rate of variation of the mains currents, which are the variations needed to be suppressed. These measurements allow a negative feedback type of modulation to be performed by the modulator 82 of figure 15, to reduce or eliminate the variations in the mains current consumed. All the signals are referenced to the ground voltage. Therefore, the voltage Vadc referred to the ground voltage is equal to the voltages across resistors 113 and 119, alternatively, plus the voltage developed by the oscillations across each inductor, which oppose the speed of variation of the oscillation current.

In the control method of the invention, flux measurement must be repeatedly performed at a same time during mains voltage Vac cycles. Preferably, it is done near the maximum value of the voltage Vac. If the stator flux frequency Wsm is not synchronised to the mains voltage, the flux may be measurable in the unconnected winding only once per 5 or 10 rotations of the stator flux Φs. This is not usually a problem, since the load 20 does not usually vary so fast as to require flux level adjustment more often.

As the motor is controlled in current mode, there is no risk of an excessive current flowing and damaging the motor if an excessive load is applied.

For a motor connected in the so-called "delta" (triangle) configuration, where there is no common node N, but each winding is connected to an end of each of two adjacent windings, one can measure the voltage at an unconnected node when no current is flowing into or out of the motor through that node, and all the previously described principles remain applicable.

The invention describes certain embodiments showing the characteristics of a method of controlling a polyphase motor, wherein a motor flux amplitude may be determined by briefly interrupting the currents in certain windings, and measuring voltage across them in order to derive required information on the operation of the motor, and to accordingly control currents supplied to the motor.

This general principle may be applied to any type of motor, such as switched reluctance motors, permanent magnet DC motors and induction motors.

**Claims**

1. A method for measuring a value of flux amplitude in a star-connected polyphase induction motor (M), comprising the steps of:

   (1)- interrupting a current flowing through at least a first winding, so as to de-energise the at least a first winding;
   (2)- imposing a fixed voltage (Vg) onto an accessible end of each winding other than the at least a first winding, the other windings entering a freewheel mode; and

   (3)- measuring a voltage induced in the at least a first winding, while the other windings are in the freewheel mode, to derive the value of flux amplitude in the motor.

2. A method for controlling a polyphase induction motor (M), the motor comprising a rotor, and a stator itself containing windings (A, B, C) each having a first end connected together at a common node (N), and each having one accessible end; the method comprising the steps of:

   (a)- imposing a current (Im) to circulate through a combination of at least two but not all of the windings, the current entering the stator by at least one accessible end, passing through the common node (N) and leaving through another at least one accessible end; the windings not carrying the current being at floating voltages;
   (b)- measuring a value of flux amplitude in the motor, according to the method of claim 1;
   (c)- imposing a current to circulate through a different combination of at least two but not all of the windings, the magnitude of the current being controlled according to the measured value of the flux amplitude in the motor, windings not carrying the current being at floating voltages; and
   (d)- periodically repeating steps (b) and (c).

3. A method according to claim 2 further comprising the steps of:

   - controlling the current (Im) imposed through the stator so as to maintain the value of the flux amplitude (|Φm|) at a substantially constant, predetermined, value (68).

4. A method according to claim 3 which further comprises the step of:

   - modulating (82) the current imposed through the stator according to a voltage (Vacd) of an external alternating voltage power source (Vac).

5. A method according to claim 4 wherein the modulating is performed so as to ensure that the current in the stator is substantially in phase with the voltage of the alternating voltage power source (Vac).

6. A method according to claim 4 or claim 5 wherein the variations of current in the mains are detected across an inductor (101, 105) used as part of a filter, and applied to modulate (82) the current consumed by the motor in a negative-feedback arrangement.

7. A method according to claim 6 wherein the voltage across the inductor is detected by a circuit (107) including two potential dividers, switched by diodes (109, 115, 117, 123) in such a way as to function symmetrically with respect to the reference point of the signal, such that a low voltage node of each divider is at the control circuit's reference voltage, whatever the voltage of the alternating power source, or the conduction state of the diodes.

8. A method for measuring a value of flux amplitude in a delta-connected polyphase induction motor (M), having a number of windings connected together at nodes, comprising the steps of:

(1)- interrupting a current flowing into at least one node, for a period of time sufficient to allow currents in the windings to stabilise;
(2)- imposing a fixed voltage upon each node other than the at least one node; and
(3)- while the fixed voltage is imposed onto the other nodes, measuring a voltage present at the at least one node to derive the value of flux amplitude in the motor.

9. A method for controlling a polyphase induction motor (M), the motor comprising a rotor, and a stator itself containing windings (A, B, C) each having two ends, each end being connected to an end of an adjacent winding, at a node, the method comprising the steps of:

(a)- imposing a current (Im) to circulate through a combination of at least two but not all of the nodes, the current entering the stator by at least a first node, passing through at least some of the windings and leaving through at least a second node;
(b)- measuring a value of flux amplitude in the motor, according to the method of claim 8;
(c)- imposing a current to circulate through a different combination of at least two but not all of nodes, the magnitude of the current being controlled according to the measured value of the flux amplitude in the motor; and
(d)- periodically repeating steps (b) and (c).

10. A circuit for controlling a polyphase induction motor (M) including: a switching bridge (30) between upper (Vdc) and lower (Vg) supply voltages; accessible supply nodes (24, 26, 28) of the motor; and a pulse width modulation controller (50) and a step controller (52), for controlling the switching bridge to cause the motor (M) to rotate at a desired speed (Wx), the pulse width modulation controller being adapted to cause a desired value of current (Im) to flow through the motor, irrespective of the voltage required to cause such a current to flow; circuitry (54, 56, 58, 62) for periodically measuring the amplitude of magnetic flux (Φm) within the motor; comparison means (66) for comparing the measured flux amplitude to a flux reference value (68); and means for modifying the pulse width modulation accordingly, **characterised in that** it further comprises a modulator (82) for controlling the instantaneous current flowing in the motor so as to be approximately proportional to the instantaneous voltage of an alternating voltage supply (Vac).

11. A circuit according to claim 10 wherein the circuitry for periodically measuring the amplitude of the magnetic flux comprises: a sample-and-hold circuit (62) for holding a value (Vsh) measured at a predetermined instant (64), at an accessible node (28) of the motor, no current flowing through the accessible node at the predetermined instant; a differential circuit (66) for generating a signal (Vacr) representative of the difference between the held value (Vsh) and a value (|Φm|*) representing a required flux amplitude (68).

**Patentansprüche**

1. Verfahren zum Messen des Betrags einer Fluß-Amplitude in einem Mehrphasen-Induktionsmotor (M) in Sternschaltung, wobei das Verfahren die Schritte umfaßt:

(1) - Unterbrechen eines Stromflusses durch wenigstens eine erste Wicklung, zur Stromabschaltung in dieser wenigstens einen ersten Wicklung,
(2) - Anlegen einer festen Spannung (Vg) an ein zugängliches Ende jeder anderen Wicklung als der wenigstens einen ersten Wicklung, derart daß die anderen Wicklungen in einen Freilauf-Mode übergehen, sowie
(3) - Messen einer in der wenigstens einen ersten Wicklung induzierten Spannung, während sich die anderen Wicklungen im Freilauf-Mode befinden, zur Gewinnung des Betrags der Fluß-Amplitude in dem Motor.

2. Verfahren zur Steuerung eines Mehrphasen-Induktionsmotors (M), welcher einen Rotor und einen Stator umfaßt, der selbst Wicklungen (A, B, C) enthält, deren jede jeweils ein erstes Ende, die in einem gemeinsamen Knotenpunkt (N) miteinander verbunden sind, und jeweils ein zugängliches Ende aufweisen, wobei das Verfahren die Schritte umfaßt:

(a) - Aufprägen eines Stroms (Im) zur Zirkulation durch eine Kombination von wenigstens zwei, aber nicht sämtlichen Wicklungen, wobei der Strom in den Stator durch wenigstens ein zugängliches Ende eintritt, durch den gemeinsamen Knotenpunkt (N) hindurchgeht und den Stator durch ein anderes wenigstens ein zugängliches Ende verläßt; wobei die den Strom nicht führenden Wicklungen sich auf flottierenden, frei laufenden Spannungen befinden;

(b) - Messen des Betrags einer Flußamplitude in dem Motor, nach dem Verfahren gemäß Anspruch 1;

(c) - Aufprägen eines Stroms zur Zirkulation durch eine davon verschiedene Kombination von wenigstens zwei, aber nicht sämtlichen Wicklungen, wobei der Größenbetrag des Stroms in Abhängigkeit von dem gemessenen Betrag der Fluß-Amplitude in dem Motor gesteuert wird und den Strom nicht führende Wicklungen sich auf flottierenden, frei laufenden Spannungen befinden; sowie

(d) - periodische Wiederholung der Schritte bzw. Stufen (b) und (c).

3. Verfahren nach Anspruch2, das des weiteren die Schritte umfaßt:

   - Steuern des aufgeprägten Stroms (Im) durch den Stator, derart daß der Betrag der Fluß-Amplitude (/Φm/) auf einem im wesentlichen konstanten vorgegebenen Wert (68) gehalten wird.

4. Verfahren nach Anspruch 3, welches weiter den Schritt umfaßt:

   - Modulieren (82) des aufgeprägten Stroms durch den Stator gemäß einer Spannung (Vacd) einer äußeren Wechselspannungsquelle (Vac).

5. Verfahren nach Anspruch 4, bei welchem die Modulation so erfolgt zu gewährleisten, daß der Strom in dem Stator im wesentlichen in Phase mit der Spannung der Wechselspannungsquelle (Vac) ist.

6. Verfahren nach Anspruch 4 oder Anspruch 5, bei welchem die Stromänderungen in der Netzleitung über einer als Teil eines Filters verwendeten Induktivität (101, 105) detektiert und zur Modulation (82) des von dem Motor in einer Gegenkopplungsanordnung verbrauchten Stroms verwendet werden.

7. Verfahren nach Anspruch 6, bei welchem die Spannung über der Induktivität durch eine Schaltung (107) mit zwei Potentialteilern detektiert wird, die durch Dioden (109, 115, 117, 123) so umgeschaltet werden, daß sie symmetrisch bezüglich dem Bezugspunkt des Signals arbeiten, derart daß ein Knotenpunkt niedriger Spannung jedes Teilers sich auf der Bezugsspannung der Steuerschaltung befindet, unabhängig von der Spannung der Wechselstromquelle oder dem Leitungszustand der Dioden.

8. Verfahren zum Messen des Betrags einer Fluß-Amplitude in einem Mehrphasen-Induktionsmotor (M) in Delta- bzw. Dreiecks-Schaltung, welcher eine Anzahl von miteinander in Knotenpunkten verbundenen Wicklungen besitzt, wobei das Verfahren die Schritte umfaßt:

   (1) - Unterbrechen eines Stromflusses in wenigstens einen Knotenpunkt, über eine ausreichende Zeitperiode, daß die Ströme in den Wicklungen sich stabilisieren können;

   (2) - Aufprägen einer festen Spannung auf jeweils jeden von dem wenigstens einen Knotenpunkt verschiedenen Knotenpunkt; sowie

   (3) - während dem Aufprägen der festen Spannung auf die anderen Knotenpunkte Messen einer an dem wenigstens einen Knotenpunkt vorliegenden Spannung, zur Ermittlung des Betrags der Fluß-Amplitude in dem Motor.

9. Verfahren zum Steuern eines Mehrphasen-Induktionsmotors (M), welcher einen Rotor und einen Stator umfaßt, der selbst Wicklungen (A, B, C) enthält, deren jede jeweils zwei Enden besitzt, wobei jedes Ende mit einem Ende einer benachbarten Wicklung in einem Knotenpunkt verbunden ist, wobei das Verfahren die Schritte umfaßt:

   (a) - Aufprägen eines Stroms (Im) zur Zirkulation durch eine Kombination von wenigstens zwei, aber nicht sämtlichen Knotenpunkten, wobei der Strom in den Stator durch wenigstens einen ersten Knotenpunkt eintritt, wenigstens einige der Wicklungen durchsetzt und durch wenigstens einen zweiten Knotenpunkt aus dem Stator austritt;

   (b) - Messen des Betrags einer Fluß-Amplitude in dem Motor, nach dem Verfahren gemäß Anspruch 8;

   (c) - Aufprägen eines Stroms zur Zirkulation durch eine davon verschiedene Kombination von wenigstens zwei, aber nicht sämtlichen Knotenpunkten, wobei der Betrag des Stroms in Abhängigkeit von dem gemessenen Wert der Fluß-Amplitude in dem Motor gesteuert wird; sowie

   (d) - periodische Wiederholung der Schritte bzw. Stufen (b) und (c).

10. Steuerschaltung für einen Mehrphasen-Induktionsmotor (M), welche umfaßt: eine Umschaltbrücke (30) zur Umschaltung zwischen oberen (Vdc) und unteren (Vg) Speisespannungen; zugängliche Speise-Knotenpunkte (24, 26, 28) des Motors; sowie eine Impulsbreitenmodulations-Regel- bzw. -Steuervorrichtung (50) und eine Schritt-Regel- bzw.

-Steuervorrichtung (52), zur Steuerung der Schaltbrücke, derart daß der Motor (M) zur Drehung mit einer gewünschten Geschwindigkeit bzw. Drehzahl (Wx) veranlaßt wird, wobei der Impulsbreitenmodulations-Regler so ausgebildet ist, daß er einen gewünschten Wert des Stromflusses (Im) durch den Motor bewirkt, unabhängig von der zur Herbeiführung eines derartigen Stromflusses erforderlichen Spannung; Schaltungen (54, 56, 58, 62) zur periodischen Messung der Amplitude des Magnetflusses (Φm) in dem Motor; Vergleichsvorrichtungen (66) zum Vergleichen der gemessenen Fluß-Amplitude mit einem Fluß-Bezugswert (68); sowie Mittel zur entsprechenden Modifizierung der Impulsbreitenmodulation,
**dadurch gekennzeichnet, daß** die Schaltung des weiteren einen Modulator (82) zur Steuerung des jeweiligen momentanen Stromflusses in dem Motor aufweist, derart daß dieser momentane Stromfluß annähernd proportional der jeweiligen momentanen Spannung einer Wechselspannungsquelle (Vac) ist.

11. Schaltung nach Anspruch 10, bei welcher die Schaltungen zur periodischen Messung der Amplitude des Magnetflusses umfassen: eine Abtast-und-Halte-Schaltung (62) zum Festhalten eines in einem vorgegebenen Zeitpunkt (64) an einem zugänglichen Knotenpunkt (28) des Motors gemessenen Wertes (Vsh), wobei in dem vorgegebenen Zeitpunkt kein Strom durch den zugänglichen Knotenpunkt fließt; eine Differenzschaltung (66) zur Erzeugung eines Signals (Vacr), das die Differenz zwischen dem festgehaltenen Wert (Vsh) und einem eine erforderliche Fluß-Amplitude (68) darstellenden Wert (/Φm/*) wiedergibt.

## Revendications

1. Procédé de mesure de l'amplitude du flux d'un moteur à induction polyphasé (M) comprenant les étapes suivantes :

    1) interrompre l'application du courant circulant dans ledit au moins un premier enroulement, pour désalimenter ainsi ledit au moins un premier enroulement ;
    2) imposer une tension fixe (Vg) sur une extrémité libre de tension aux bornes de chaque enroulement autre que ledit au moins un premier enroulement, ces autres enroulements étant alors en roue libre ; et
    3) mesurer la tension induite sur le au moins un premier enroulement, les autres enroulements étant en roue libre, pour fournir la valeur de l'amplitude du flux dans le moteur.

2. Procédé de régulation d'un moteur à induction polyphasé (M), le moteur comprenant un rotor et un stator muni d'enroulements (A, B, C) dont chacun a une première extrémité connectée à un noeud commun (N) et une seconde extrémité accessible, ce procédé comprenant les étapes suivantes :

    a) imposer la circulation d'un courant (Im) à travers une combinaison d'au moins deux mais pas de tous les enroulements, le courant entrant dans le stator par au moins une extrémité accessible, passant par le noeud commun (N) et sortant par au moins une autre extrémité accessible, les enroulements ne transportant pas de courant étant à tension flottante ;
    b) mesurer la valeur de l'amplitude du flux dans le moteur selon le procédé de la revendication 1 ;
    c) imposer la circulation d'un courant sur une combinaison différente d'au moins deux mais pas de tous les enroulements, l'amplitude du courant étant commandée selon la valeur obtenue de l'amplitude de flux dans le moteur, les enroulements ne transportant pas de courant étant à des tensions flottantes ; et
    d) répéter périodiquement les étapes b) et c),

3. Procédé selon la revendication 2, comprenant en outre l'étape consistant à commander le courant (Im) imposé au stator de façon à maintenir la valeur de l'amplitude du flux (|Φm|) à une valeur prédéterminée sensiblement constante (68).

4. Procédé selon la revendication 3, comprenant en outre l'étape consistant à moduler (82) le courant imposé au stator en fonction de la tension (Vacd) d'une source de tension alternative externe (Vac).

5. Procédé selon la revendication 4, dans lequel la modulation est réalisée de façon à assurer que le courant dans le stator est sensiblement en phase avec la tension de la source alternative (Vac).

6. Procédé selon la revendication 4 ou 5, dans lequel les variations de courant sur le secteur sont détectées aux bornes d'une inductance (101, 105) utilisée en tant que partie d'un filtre et appliquées pour moduler (82) le courant consommé par le moteur dans une disposition à réaction négative.

7. Procédé selon la revendication 6, dans lequel la tension aux bornes de l'inductance est détectée par un circuit (107) comprenant deux diviseurs de tension, commutés par des diodes (109, 115, 117, 123) de façon à fonctionner symétriquement par rapport au point de référence du signal, de sorte que le point bas de chacun des diviseurs est au même potentiel que le point de référence du circuit de commande quelles que soient les alternances du secteur et l'état de conduction des diodes.

8. Procédé de mesure de la valeur de l'amplitude du flux d'un moteur à induction polyphasé (M) connecté en triangle, comportant plusieurs enroulements connectés ensemble à des noeuds, comprenant les étapes suivantes :

(1) interrompre l'application du courant circulant dans au moins un noeud, pendant une durée suffisante pour permettre au courant dans les enroulements de se stabiliser ;
(2) imposer une tension fixe sur chaque noeud autre que ledit au moins un noeud ; et
(3) tandis que la tension fixe est imposée sur les autres noeuds, mesurer la tension sur ledit au moins un noeud pour fournir la valeur de l'amplitude du flux dans le moteur.

9. Procédé de régulation d'un moteur à induction polyphasé (M), le moteur comprenant un rotor et un stator muni d'enroulements (A, B, C) dont chacun a deux extrémités, chaque extrémité étant connectée à une extrémité de l'enroulement adjacent, au niveau d'un noeud, ce procédé comprenant les étapes suivantes :

a) imposer la circulation d'un courant (Im) à travers une combinaison d'au moins deux mais pas de tous les noeuds, le courant entrant dans le stator par au moins un premier noeud, passant par au moins certains des enroulements et sortant par au moins un second noeud ;
b) mesurer la valeur de l'amplitude du flux dans le moteur par le procédé de la revendication 8 ;
c) imposer la circulation d'un courant à travers une combinaison différente d'au moins deux mais pas de tous les noeuds, l'amplitude du courant étant commandée en fonction d'une valeur dérivée de l'amplitude du flux dans le moteur ; et
d) répéter périodiquement les étapes b) et c),

10. Circuit de régulation d'un moteur à induction polyphasé (M) comprenant : un pont de commutation (30) entre des tensions d'alimentation haute (Vdc) et basse (Vg) ;
des noeuds d'accès d'alimentation (24, 26, 28) du moteur ; et un circuit de commande de modulation de largeur d'impulsion (50), et un dispositif de commande de pas (52) pour amener le moteur (M) à tourner à une vitesse désirée (Wx), le circuit de commande de modulation de largeur d'impulsion étant adapté à amener un courant de valeur désirée (Im) à circuler dans le moteur, indépendamment de la tension requise pour provoquer ce courant ; un circuit (54, 56, 58, 62) pour mesurer périodiquement l'amplitude du flux magnétique (Φm) dans le moteur ; des moyens de comparaison (66) à une valeur de référence de flux (68) ; et des moyens de modification de la modulation de largeur d'impulsion en fonction du résultat de la comparaison, **caractérisé en ce qu'**il comprend en outre un modulateur (82) pour commander le courant instantané circulant dans le moteur pour qu'il soit sensiblement proportionnel à la tension instantanée de l'alimentation alternative (Vac).

11. Circuit selon la revendication 10, dans lequel le circuit de mesure périodique de l'amplitude du flux magnétique comprend un circuit d'échantillonnage-blocage (62) pour maintenir une valeur (Vsh) mesurée à un instant prédéterminé (64) sur un noeud accessible (28) du moteur, aucun courant ne circulant dans le noeud accessible audit instant prédéterminé, et un circuit différentiel (66) pour produire un signal (Vacr) représentatif de la différence entre la valeur maintenue (Vsh) et une valeur (|Φm|*) représentant une amplitude de flux requise (68).

Heavy Mechanical Load

Fig 1

Light Mechanical Load

Fig 7

Light Mechanical Load

Fig 11

Heavy Mechanical Load

Fig 12

P3

P1

A

C

N

M

B

X

P2

Fig 2

P1

Ts

P2

Fig 3

P3

s6 s1 s2 s3 s4 s5 s6 s1

Vm
Vg
P1

Vm
Vg
P2
Fig 4

Vm
Vg
P3

Ts

s6 s1 s2 s3 s4 s5 s6 s1

Vm
Vg
P1

Vm
Vg
P2
Fig 5

Vm
Vg
P3

s6 s1 s2 s3 s4 s5 s6 s1

Ts

Fig 6

Torque

T

Tmax

X1

Ws1

Ws2

X2

Speed

Wx

Wsm1

Wsm2

W

Fig 8

Vm  Heavy Mechanical Load

I

φ

t

Fig 9

Vm  Light Mechanical Load

I

φ

t

Fig 10

Fig 13

Fig 14A

Fig 14B

Fig 14C

Fig 14D

Fig 15

EP 0 849 872 B1

Vac
(volts)

300

150

0

Ts

Ia

Ib

Ic

S6 | S1 | S2 | S3 | S4 | S5 | S6 | S1

Ts

Fig 16

Fig 17

Fig 18